# EUROPÄISCHE PATENTANMELDUNG

(11) **EP 1 887 812 A1**
(43) Veröffentlichungstag der Anmeldung: **13.02.2008**
(21) Anmeldenummer: 06016581.8
(22) Anmeldetag: 08.08.2006
(51) Int. Cl.: H04Q 7/30

(54) **Gemeinsame Benutzung einer Transport-Network-Layer-(TNL)-Verbindung für HSDPA und EDCH**

(71) Anmelder: Nokia Siemens Networks GmbH & Co. KG, 81541 München (DE)
(72) Erfinder: Fehringer, Manfred, 3300 Winklarn-Haag Dorf (AT); Gartner, Beate, 2542 Kottingbrunn (AT); Ulrich, Thomas, 67098 Bad Dürkheim (DE); Vesely, Alexander, 8330 Raabau (AT)

(57) **Zusammenfassung**

Die Erfindung betrifft ein Verfahren zum Betreiben eines Funkkommunikationssystems, umfassend eine Teilnehmerstation (UE), eine netzseitige Funkstation (NodeB) und eine Steuereinrichtung (RNC). Gemäß einem ersten von der Teilnehmerstation (UE) in Anspruch genommenen Dienst (HSDPA) werden Nutzinformationen ausschließlich in Richtung zu der Teilnehmerstation (UE) hin übertragen, und gemäß einem zweiten von der Teilnehmerstation (UE) in Anspruch genommenen Dienst (EDCH) werden Nutzinformationen ausschließlich in Richtung von der Teilnehmerstation (UE) ausgehend übertragen. Hierbei sind der erste Dienst (HSDPA) und der zweite Dienst (EDCH) unabhängig voneinander in Anspruch nehmbar. Die Nutzinformationen des ersten Dienstes (HSDPA) und des zweiten Dienstes (EDCH) werden zwischen der netzseitigen Funkstation (NodeB) und der Steuereinrichtung (RNC) über eine gemeinsame bidirektionale Verbindung (TNL com) übertragen. Weiterhin betrifft die Erfindung eine netzseitige Funkstation (NodeB) und eine Steuereinrichtung (RNC) zur Durchführung des Verfahrens.

## Beschreibung

Die Erfindung betrifft ein Verfahren zum Betreiben eines Funkkommunikationssystems, bei welchem gemäß einem ersten Dienst Nutzinformationen ausschließlich in Richtung zu einer Teilnehmerstation hin und gemäß einem zweiten Dienst Nutzinformationen ausschließlich in Richtung von der Teilnehmerstation ausgehend übertragen werden.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstation kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Ein weiteres Beispiel stellen Breitbandnetze mit drahtlosem Zugang beispielsweise gemäß IEEE 802.16 dar. Zukünftige Mobilfunkkommunikationssysteme können z.B. Weiterentwicklungen von UMTS, als LTE (Long Term Evolution) bezeichnet, oder Systeme der vierten Generation, sowie Ad-hoc-Netze sein. Außer weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Wird Leitungsvermittlung (englisch: circuit switching) eingesetzt, so wird einer Teilnehmerstation eine konstante Bandbreite bzw. Funkressourcen, welche eine Übertragung mit einer konstanten Datenrate ermöglichen, zur exklusiven Nutzung zugewiesen. Ein Beispiel für leitungsvermittelte Funkressourcen bei UMTS sind die dedizierten Kanäle, welche einem oder mehreren konstant einer bestimmten Teilnehmerstation zugewiesenen Kodes entsprechen. Bei der Paketvermittlung (englisch: packet switching) hingegen werden Funkkanäle verwendet, welche unter den Teilnehmerstationen aufgeteilt werden (englisch: shared channels). Diese Kanäle werden einer Teilnehmerstation lediglich kurzzeitig zugewiesen für die Versendung oder den Empfang eines Paketes. Ein Beispiel für einen Dienst mit paketvermittelten Ressourcen bei UMTS ist HSDPA (High Speed Downlink Packet Access), bei welchem einer Teilnehmerstation Funkressourcen für den Empfang von Datenpaketen zugewiesen werden, oder EDCH (Enhanced Dedicated Channel) bzw. HSUPA (High Speed Uplink Packet Access), bei welchem einer Teilnehmerstation Funkressourcen für die Versendung von Datenpaketen zugewiesen werden. Funkressourcen eines gemeinsamen Kanals bzw. paketvermittelte Funkressourcen werden einer Teilnehmerstation somit im Gegensatz zu leitungsvermittelten Funkressourcen nicht zugewiesen, wenn die Teilnehmerstation aktuell keine Nachrichten zu versenden oder empfangen hat.

Der Erfindung liegt die Aufgabe zugrunde, ein effizientes Verfahren zum Betreiben eines Funkkommunikationssystems aufzuzeigen, bei welchem eine Teilnehmerstation gemäß einem ersten Dienst Nutzinformationen ausschließlich empfangen und gemäß einem zweiten Dienst Nutzinformationen ausschließlich versenden kann. Weiterhin sollen netzseitige Einrichtungen zur Durchführung des Verfahrens vorgestellt werden.

Diese Aufgabe wird durch ein Verfahren mit den Merkmalen des Anspruchs 1, sowie durch eine netzseitige Funkstation und durch eine Steuereinrichtung mit Merkmalen von nebengeordneten Ansprüchen gelöst. Vorteilhafte Ausgestaltungen und Weiterbildungen sind Gegenstand von Unteransprüchen.

Gemäß dem erfindungsgemäßen Verfahren zum Betreiben eines Funkkommunikationssystems, welches eine Teilnehmerstation, eine netzseitige Funkstation und eine Steuereinrichtung umfasst, nimmt die Teilnehmerstation einen ersten und einen zweiten Dienst in Anspruch. Gemäß dem ersten Dienst werden Nutzinformationen ausschließlich in Richtung zu der Teilnehmerstation hin übertragen. Gemäß dem zweiten Dienst werden Nutzinformationen ausschließlich in Richtung von der Teilnehmerstation ausgehend übertragen. Hierbei sind der erste Dienst und der zweite Dienst unabhängig voneinander in Anspruch nehmbar. Die Nutzinformationen des ersten Dienstes und des zweiten Dienstes werden zwischen der netzseitigen Funkstation und der Steuereinrichtung über eine gemeinsame bidirektionale Verbindung übertragen.

Es werden zwei Übertragungsstrecken betrachtet: zum einen die Funkübertragung zwischen der netzseitigen Funkstation und der Teilnehmerstation, und zum anderen die Übertragung zwischen der netzseitigen Funkstation und der Steuereinrichtung, welche vorzugsweise über eine Leitung verläuft. Die Nutzinformationen des ersten Dienstes werden in Richtung zur Teilnehmerstation hin übertragen, d.h. zuerst von der Steuereinrichtung zur netzseitigen Funkstation, und im Anschluss von der netzseitigen Funkstation zur Teilnehmerstation. Die Nutzinformationen des zweiten Dienstes hingegen werden in Richtung von der Teilnehmerstation weg übertragen, d.h. zuerst von der Teilnehmerstation zur netzseitigen Funkstation, und im Anschluss von der netzseitigen Funkstation zur Steuereinrichtung.

Es erfolgt im Rahmen des ersten Dienstes keine Nutzinformationenübertragung in die Aufwärtsrichtung, d.h. von der Teilnehmerstation ausgehend, und im Rahmen des zweiten Dienstes erfolgt keine Nutzinformationenübertragung in die Abwärtsrichtung, d.h. in Richtung zur Teilnehmerstation hin. Hingegen ist es bei beiden Diensten möglich, dass Signalisierungsinformationen, welche lediglich zwischen der Teilnehmerstation und der netzseitigen Funkstation, und nicht zwischen der netzseitigen Funkstation und der Steuereinrichtung übertragen werden, in Aufwärts- und/oder Abwärtsrichtung übertragen werden.

Der erste und der zweite Dienst hängen nicht insofern voneinander ab, dass sie gemeinsam in Anspruch genommen werden müssen. Vielmehr ist es möglich, den ersten Dienst in Anspruch zu nehmen, ohne den zweiten Dienst in Anspruch zu nehmen, und umgekehrt. Wird ein Dienst von der Teilnehmerstation in Anspruch genommen, so werden diesem Dienst entsprechende Nutzinformationen zu der Teilnehmerstation hin oder von der Teilnehmerstation ausgehend versendet.

Für die Übertragung der Nutzinformationen des ersten und des zweiten Dienstes zwischen der netzseitigen Funkstation und der Steuereinrichtung wird lediglich eine einzelne Verbindung verwendet. Hierbei handelt es sich um eine bidirektionale Verbindung. Eine zur Übertragung bestimmter Daten über eine Schnittstelle genutzte Verbindung zeichnet sich insbesondere durch bestimmte Übertragungsressourcen der Schnittstelle aus, welche für die Übertragung dieser Daten zur Verfügung stehen bzw. reserviert sind.

Die Verwendung einer einzigen Verbindung zwischen der netzseitigen Funkstation und der Steuereinrichtung für die beiden Dienste betrifft die Nutzinformationen der Teilnehmerstation; für die Nutzinformationen des ersten und des zweiten Dienstes einer anderen Teilnehmerstation wird vorzugsweise eine andere Verbindung eingesetzt. D.h. die betrachtete gemeinsame Verbindung wird vorzugsweise ausschließlich für die Teilnehmerstation betreffende Informationen genutzt.

Es werden über die gemeinsame Verbindung die Nutzinformationen des ersten Dienstes von der Steuereinrichtung zur netzseitigen Funkstation, und die Nutzinformationen des zweiten Dienstes von der netzseitigen Funkstation zur Steuereinrichtung übertragen. Dies hat den Vorteil, dass die gemeinsame bidirektionale Verbindung effektiv ausgenutzt wird, da in jede der beiden Richtungen eine Datenübertragung stattfindet. Würde hingegen für den ersten Dienst eine erste bidirektionale Verbindung und für den zweiten Dienst eine zweite bidirektionale Verbindung zwischen der netzseitigen Funkstation und der Steuereinrichtung eingerichtet und verwendet, so würden diese weniger effizient genutzt werden, so dass Übertragungsressourcen der Schnittstelle zwischen der netzseitigen Funkstation und der Steuereinrichtung verschwendet würden. Weiterhin würde in diesem Fall ein größerer Verwaltungsaufwand aufgrund der größeren Anzahl von Verbindungen anfallen.

In Weiterbildung der Erfindung wird die gemeinsame bidirektionale Verbindung in Bezug auf die Nutzinformationsübertragung ausschließlich zur Übertragung der Nutzinformationen des ersten Dienstes und des zweiten Dienstes genutzt. Dies bedeutet, dass keine Nutzinformationen eines anderen Dienstes über die gemeinsame bidirektionale Verbindung übertragen werden; die gemeinsame bidirektionale Verbindung wird exklusiv für den ersten und den zweiten Dienst genutzt. Es ist jedoch möglich, dass über die gleiche Schnittstelle zwischen der netzseitigen Funkstation und der Steuereinrichtung Nutzinformationen anderer Dienste über andere Verbindungen übertragen werden. Diese Ausführungen beziehen sich auf die betrachtete Teilnehmerstation. Wird die Erfindung auf mehrere Teilnehmerstationen angewandt, so wird vorzugsweise für jede Teilnehmerstation eine gemeinsame bidirektionale Verbindung in Bezug auf die Nutzinformationsübertragung exklusiv zur Übertragung der Nutzinformationen der jeweiligen Teilnehmerstation des ersten Dienstes und des zweiten Dienstes genutzt.

Einer Ausgestaltung der Erfindung gemäß werden der Teilnehmerstation für den ersten Dienst und den zweiten Dienst paketvermittelte Funkressourcen zugewiesen. Die Nutzinformationen werden somit in Form von Datenpaketen übertragen. In diesem Fall handelt es sich bei dem ersten Dienst um einen Paketdienst in Abwärtsrichtung, und bei dem zweiten Dienst um einen Paketdienst in Aufwärtsrichtung.

Besonders vorteilhaft ist es, wenn der erste Dienst von der Teilnehmerstation in Anspruch genommen wird und über die gemeinsame bidirektionale Verbindung in Bezug auf die Nutzinformationsübertragung ausschließlich Nutzinformationen des ersten Dienstes übertragen werden, und später zusätzlich der zweite Dienst von der Teilnehmerstation in Anspruch genommen wird und über die gemeinsame bidirektionale Verbindung die Nutzinformationen des ersten und des zweiten Dienstes übertragen werden. Entsprechendes gilt umgekehrt, wenn zuerst der zweite Dienst und später zusätzlich der erste Dienst genutzt wird. Die Inanspruchnahme der beiden Dienste muss somit nicht gleichzeitig erfolgen. Vielmehr kann zuerst der eine und später zusätzlich der andere der beiden Dienste genutzt werden. Wenn der später in Anspruch genommene Dienst hinzukommt, wird begonnen, die zuvor nur für den zuerst in Anspruch genommenen Dienst genutzte Verbindung als gemeinsame bidirektionale Verbindung für die Nutzinformationsübertragung beider Dienste einzusetzen.

In Weiterbildung der Erfindung werden Nutzinformationen eines dritten von der Teilnehmerstation in Anspruch genommenen Dienstes zwischen der netzseitigen Funkstation und der Steuereinrichtung über eine weitere bidirektionale Verbindung übertragen. In diesem Fall existieren für die Teilnehmerstation zumindest zwei bidirektionale Verbindung zwischen der netzseitigen Funkstation und der Steuereinrichtung, wobei die eine für den ersten und den zweiten Dienst genutzt wird, und die andere für den dritten Dienst.

Gemäß dem dritten Dienst werden vorzugsweise Nutzinformationen sowohl in Richtung zu der Teilnehmerstation hin als auch in Richtung von der Teilnehmerstation weg übertragen. In diesem Fall handelt es sich bei dem dritten Dienst im Gegensatz zum ersten und zweiten Dienst um einen Dienst mit bidirektionaler Übertragung zwischen der netzseitigen Funkstation und der Teilnehmerstation. Besonders vorteilhaft ist es, wenn der Teilnehmerstation für den dritten Dienst leitungsvermittelte Funkressourcen zugewiesen werden.

Mit Vorzug handelt es sich bei der netzseitigen Funkstation und der Steuereinrichtung um Bestandteile eines UMTS-Mobilfunkkommunikationssystems.

Die erfindungsgemäße netzseitige Funkstation weist Mittel auf zum Kommunizieren per Funk mit der Teilnehmerstation gemäß einem ersten von der Teilnehmerstation in Anspruch genommenen Dienst, bei welchem Nutzinformationen ausschließlich in Richtung zu der Teilnehmerstation übertragen werden, Mittel zum Kommunizieren per Funk mit der Teilnehmerstation gemäß einem zweiten von der Teilnehmerstation in Anspruch genommenen Dienst, bei welchem Nutzinformationen ausschließlich in Richtung von der Teilnehmerstation ausgehend übertragen werden, wobei der erste und der zweite Dienst unabhängig voneinander in Anspruch nehmbar sind. Weiterhin sind Mittel der netzseitigen Funkstation vorhanden zum Empfangen der Nutzinformationen des ersten Dienstes von der Steuereinrichtung und zum Versenden der Nutzinformationen des zweiten Dienstes an die Steuereinrichtung, wobei die Nutzinformationen des ersten Dienstes und des zweiten Dienstes zwischen der netzseitigen Funkstation und der Steuereinrichtung über eine gemeinsame bidirektionale Verbindung übertragen werden.

Die erfindungsgemäße Steuereinrichtung weist Mittel auf zum Senden von Nutzinformationen eines ersten von der Teilnehmerstation in Anspruch genommenen Dienstes zu der netzseitigen Funkstation und zum Empfangen von Nutzinformationen eines zweiten von der Teilnehmerstation in Anspruch genommenen Dienstes von der netzseitigen Funkstation, wobei der erste und der zweite Dienst unabhängig voneinander in Anspruch nehmbar sind. Hierbei werden die Nutzinformationen des ersten Dienstes und des zweiten Dienstes zwischen der netzseitigen Funkstation und der Steuereinrichtung über eine gemeinsame bidirektionale Verbindung übertragen. Weiterhin werden gemäß dem ersten Dienst Nutzinformationen ausschließlich in Richtung zu der Teilnehmerstation übertragen, und gemäß dem zweiten Dienst werden Nutzinformationen ausschließlich in Richtung von der Teilnehmerstation ausgehend übertragen.

Die erfindungsgemäße netzseitige Funkstation und die erfindungsgemäße Steuereinrichtung eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Mobilfunkkommunikationssystem mit einer ersten Verbindungskonfiguration,
- Figur 2:: einen Ausschnitt aus einem Mobilfunkkommunikationssystem mit einer erfindungsgemäßen Verbindungskonfiguration.

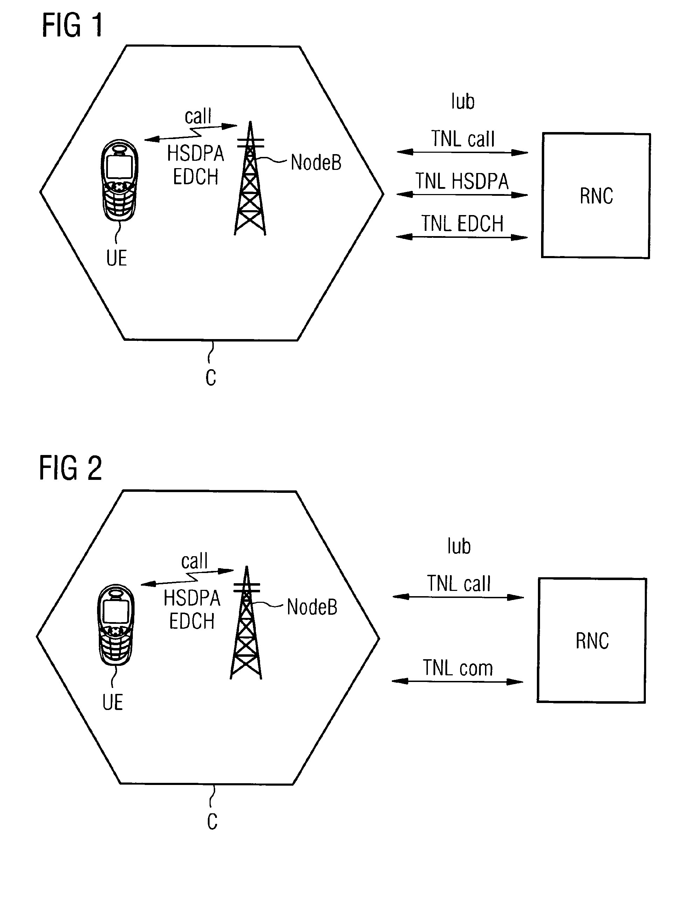

Die Erfindung ist auf verschiedene Arten von Funkkommunikationssystemen anwendbar. Im folgenden wird als konkretes Beispiel ein Mobilfunkkommunikationssystem nach dem Standard UMTS betrachtet. Die Erfindung ist jedoch nicht auf derartige Systeme beschränkt, insbesondere kann es sich bei dem betrachteten Mobilfunkkommunikationssystem auch um ein System gemäß einer Weiterentwicklung von UMTS, als LTE (Long Term Evolution) bezeichnet, handeln. Der in Figur 1 dargestellte Ausschnitt aus dem Mobilfunkkommunikationssystem zeigt die Funkzelle C der netzseitigen Funkstation NodeB. Die netzseitige Funkstation NodeB kommuniziert mit Teilnehmerstationen, wie z.B. mit der innerhalb der Funkzelle C befindlichen Teilnehmerstation UE. Über die Iub Schnittstelle ist die netzseitige Funkstation NodeB mit der Einrichtung RNC (Radio Network Controller) verbunden, welche für die Kontrolle und Überwachung von Funkverbindungen zuständig ist, z.B. für die Verwaltung von Kodes und Zellwechsel (Handover). Die Übertragung von Informationen zwischen der Funkstation NodeB und der Einrichtung RNC kann über ATM erfolgen; bei UMTS ist hierfür seit Release 5 auch die Verwendung von IP standardisiert. Die Einrichtung RNC ist üblicherweise für eine Mehrzahl von netzseitigen Funkstationen zuständig. Aus Gründen der Übersichtlichkeit sind weitere Funkzellen, Teilnehmerstationen und netzseitige Einrichtungen nicht in Figur 1 dargestellt.

Zwischen der Teilnehmerstation UE und der netzseitigen Funkstation NodeB werden Nutzinformationen übertragen. Im folgenden wird unter dem Begriff der Nutzinformationen nur diejenigen Informationen verstanden, welche auch über die Iub-Schnittstelle zwischen der netzseitigen Funkstation NodeB und der Einrichtung RNC übertragen werden. In Abwärtsrichtung werden Nutzinformationen dementsprechend über die Iub-Schnittstelle von der Einrichtung RNC an die netzseitige Funkstation NodeB übertragen, von welcher sie per Funk an die Teilnehmerstation UE ausgestrahlt werden; in Aufwärtsrichtung werden Nutzinformationen dementsprechend von der Teilnehmerstation UE per Funk an die netzseitige Funkstation NodeB ausgestrahlt, von welcher sie über die Iub-Schnittstelle an die Einrichtung RNC weitergeleitet werden.

Zur Übertragung über die Iub-Schnittstelle werden TNL-Verbindungen (TNL: Transport Network Layer) bzw. TNL-Bearer verwendet. Diese sind in Figur 1 jeweils durch einen Doppelpfeil zwischen der netzseitigen Funkstation NodeB und der Einrichtung RNC symbolisiert. Bei jeder TNL-Verbindung handelt es sich um eine bidirektionale Verbindung. Dies trifft auch auf TNL-Verbindungen zu, über welche Nutzdaten nur in eine Richtung übertragen werden; dies ist aufgrund eines zwischen der netzseitigen Funkstation NodeB und der Einrichtung RNC durchzuführenden Handshake-Mechanismus nötig. Jeder Doppelpfeil bzw. jede TNL-Verbindung entspricht hierbei einem bestimmten Umfang an Übertragungskapazität der Schnittstelle Iub, welcher für diese TNL-Verbindung reserviert ist. Hierbei kann für verschiedene TNL-Verbindungen ein verschiedener Umfang von Übertragungsressourcen der lub-Schnittstelle verwendet werden. Weiterhin ist es pro TNL-Verbindung möglich, dass der verwendete Umfang von Übertragungsressourcen mit der Zeit variiert.

Es wird zuerst eine Situation betrachtet, in welcher die Teilnehmerstation UE ein Telefonat call mit einer anderen Teilnehmerstation führt. Nach bekannten Verfahren wird hierfür eine TNL-Verbindung TNL call zwischen der netzseitigen Funkstation NodeB und der Einrichtung RNC aufgebaut. Auch wird eine Verbindung zwischen der Teilnehmerstation UE und der netzseitigen Funkstation NodeB aufgebaut. Auf der physikalischen Schicht zwischen der Teilnehmerstation UE und der netzseitigen Funkstation NodeB wird hierzu der DPCH (Dedicated Physical Channel) verwendet. Dieser besteht aus einem Kode für den DPDCH (Dedicated Physical Data Channel) und einem Kode für den DPCCH (Dedicated Physical Control Channel) .

Die Nutzinformationen des Telefonats call, welche die Teilnehmerstation UE unter Verwendung des DPCH an die netzseitige Funkstation NodeB sendet, werden von der netzseitigen Funkstation NodeB über die TNL-Verbindung TNL call an die Einrichtung RNC weitergeleitet. Von hier werden sie an weitere Infrastruktureinrichtungen weitergeleitet. Die Nutzinformationen des Telefonats call, welche unter Verwendung des DPCH von der netzseitigen Funkstation NodeB an die Teilnehmerstation UE zu senden sind, werden der netzseitigen Funkstation NodeB von der Einrichtung RNC über die TNL-Verbindung TNL call zur Verfügung gestellt. Über die TNL-Verbindung TNL call werden somit Nutzinformationen des Telefonats call in zwei Richtungen übertragen: einerseits zu der Teilnehmerstation UE hin und andererseits von der Teilnehmerstation UE ausgehend.

Zusätzlich zu dem dem Telefonat entsprechenden Dienst call kann der DPCH für weitere Dienste, wie z.B. für den Download von Daten aus dem Internet, genutzt werden. Zwar werden diese Daten auf dem gleichen physikalischen Kanal von der netzseitige Funkstation NodeB an die Teilnehmerstation UE übertragen wie die Nutzinformationen des Telefonats call, für die Übertragung dieser Nutzinformationen des weiteren Dienstes über die Iub Schnittstelle jedoch wird eine eigene TNL-Verbindung - in Figur 1 nicht dargestellt- verwendet. Dies entspricht dem gemäß dem Stand der Technik angewandten Grundsatz, dass für jeden Dienst, welchen eine Teilnehmerstation aktuell in Anspruch nimmt, eine eigene TNL-Verbindung eingesetzt wird.

Neben dem Telefongespräch call nimmt die Teilnehmerstation den Dienst HSDPA (High Speed Downlink Packet Access) in Anspruch. Bei HSDPA ist eine Übertragung von Nutzinformationen ausschließlich in Abwärtsrichtung möglich. HSDPA ermöglicht die Übertragung großer Datenmengen wie z.B. von Spielen oder Filmen. Bei UMTS sind eine Mehrzahl von HSDPA-Kodes vorgesehen, welche einer Teilnehmerstation zugewiesen werden können. Bei HSDPA handelt es sich um einen paketvermittelten (englisch: packet switched) Dienst, daher steht ein HSDPA-Kode einer Teilnehmerstation nicht permanent, sondern lediglich zeitweise zum paketweisen Empfang von Nutzinformationen zur Verfügung; die HSDPA-Kanäle sind daher als gemeinsame Kanäle (englisch: shared channels) ausgebildet. Die physikalischen Kanäle zur Übertragung der Nutzinformationen in Abwärtsrichtung werden mit HS-PDSCH (High Speed Physical Downlink Shared Channel) bezeichnet. In Aufwärtsrichtung sendet die Teilnehmerstation UE, welche HSDPA nutzt, Informationen über die Kanalqualität, die CQI (Channel Quality Indicator) Werte, an die netzseitige Funkstation NodeB. Hierbei handelt es sich jedoch nicht um Nutzinformationen, diese Informationen über die Kanalqualität werden nicht an die Einrichtung RNC weitergeleitet.

Für die Übertragung der HSDPA-Nutzinformationen der Teilnehmerstation UE von der Einrichtung RNC an die netzseitige Funkstation NodeB wird die TNL-Verbindung TNL HSDPA eingerichtet und verwendet. Wie oben bereits erwähnt handelt es sich auch bei der TNL-Verbindung TNL HSDPA um eine bidirektionale Verbindung. Dennoch werden über die TNL-Verbindung TNL HSDPA Nutzinformationen nur in der Richtung von der Einrichtung RNC an die netzseitige Funkstation NodeB übertragen, und nicht von der netzseitigen Funkstation NodeB an die Einrichtung RNC. Wenn die Teilnehmerstation UE gleichzeitig das Telefonat call führen und den Dienst HSDPA nutzen möchte, werden für die Nutzinformationsübertragung betreffend die Teilnehmerstation UE über die Iub Schnittstelle zwei TNL-Verbindungen benötigt.

Nachdem die Teilnehmerstation UE bereits mit der Nutzung des Dienstes HSDPA begonnen hat, soll nun zusätzlich der Dienst EDCH (Enhanced Dedicated Channel), auch als HSUPA (High Speed Uplink Packet Access) bezeichnet, verwendet werden. Hierbei handelt es sich um ein Übertragungsverfahren für UMTS, welches hohe Datenraten in Aufwärtsrichtung ermöglichen soll. Hierdurch liegt ein komplementärer Dienst zu HSDPA vor. Entsprechend den Ausführungen zu HSDPA stehen für den Dienst EDCH Kodes zur Verfügung, welche gemeinsame Kanäle darstellen und in Aufwärtsrichtung genutzt werden. Während bei HSDPA Nutzinformationen ausschließlich in Abwärtsrichtung übertragen werden, findet bei EDCH eine Nutzinformationsübertragung ausschließlich in Aufwärtsrichtung statt.

Entsprechend dem im Stand der Technik üblichen Vorgehen, für jeden Dienst einer Teilnehmerstation eine eigene TNL-Verbindung einzurichten, kann für die Weiterleitung der EDCH-Nutzinformationen der Teilnehmerstation UE von der netzseitigen Funkstation NodeB an die Einrichtung RNC eine TNL-Verbindung TNL EDCH eingerichtet und verwendet werden. Hierbei handelt es sich um eine bidirektionale Verbindung, welche zur Nutzinformationsübertragung jedoch ausschließlich in der Richtung von der netzseitigen Funkstation NodeB zu der Einrichtung RNC, und nicht in der Richtung von der Einrichtung RNC zu der netzseitigen Funkstation NodeB eingesetzt wird.

Figur 2 zeigt die erfindungsgemäße Verwendung von TNL-Verbindungen für den Fall, dass die Teilnehmerstation UE gleichzeitig die Dienste HSDPA und EDCH in Anspruch nimmt. Für die beiden Dienste HSDPA und EDCH wird eine gemeinsame TNL-Verbindung TNL com eingerichtet und verwendet. Über die gemeinsame TNL-Verbindung TNL com werden die HSDPA-Nutzinformationen der Teilnehmerstation UE von der Einrichtung RNC zu der netzseitigen Funkstation NodeB übertragen, und die EDCH-Nutzinformationen der Teilnehmerstation UE von der netzseitigen Funkstation NodeB zu der Einrichtung RNC. Für das Telefonat call ist zusätzlich die TNL-Verbindung TNL call eingerichtet. Gegebenenfalls können bei Verwendung weiterer Dienste durch die Teilnehmerstation UE weitere TNL-Verbindungen eingesetzt werden.

Die Verwendung der gemeinsamen TNL-Verbindung TNL com hat den Vorteil, dass für die beiden Dienste HSDPA und EDCH der Teilnehmerstation UE auf der Iub Schnittstelle nicht Übertragungsressourcen entsprechend zwei TNL-Verbindungen reserviert werden müssen, sondern lediglich entsprechend einer einzigen TNL-Verbindung. Eine Verwechslung der HSDPA-Nutzinformationen und der EDCH-Nutzinformationen ist ausgeschlossen, da diese jeweils ausschließlich in eine Richtung übertragen werden. Zusätzlich können Kontrollinformationen übertragen werden, welche anzeigen, welche anzeigen, ob es sich bei den übertragenen Informationen um Signalisierungs- oder Nutzinformationen handelt.

Wird von der Teilnehmerstation UE zuerst der Dienst HSDPA und später zusätzlich der Dienst EDCH in Anspruch genommen, so wird eine TNL-Verbindung für den Dienst HSDPA eingerichtet und für die Übertragung der HSDPA-Nutzinformationen von der netzseitigen Funkstation NodeB zu der Einrichtung RNC verwendet. Bei einer späteren Nachfrage der Teilnehmerstation UE nach dem Dienst EDCH wird keine neue TNL-Verbindung eingerichtet. Vielmehr wird die bereits aufgebaute und für HSDPA verwendete TNL-Verbindungen herangezogen, um auch die EDCH-Nutzinformationen zu übertragen. Entsprechendes gilt auch für den umgekehrten Fall, bei welchem zuerst EDCH und später zusätzlich HSDPA verwendet wird. Gegebenenfalls können vor der Hinzunahme des weiteren Dienstes zu der bestehenden TNL-Verbindung Schritte der Umkonfiguration dieser TNL-Verbindung erfolgen.

## Patentansprüche

1. Verfahren zum Betreiben eines Funkkommunikationssystems, umfassend eine Teilnehmerstation (UE), eine netzseitige Funkstation (NodeB) und eine Steuereinrichtung (RNC), bei welchem
gemäß einem ersten von der Teilnehmerstation (UE) in Anspruch genommenen Dienst (HSDPA) Nutzinformationen ausschließlich in Richtung zu der Teilnehmerstation (UE) hin übertragen werden,
gemäß einem zweiten von der Teilnehmerstation (UE) in Anspruch genommenen Dienst (EDCH) Nutzinformationen ausschließlich in Richtung von der Teilnehmerstation (UE) ausgehend übertragen werden,
wobei der erste Dienst (HSDPA) und der zweite Dienst (EDCH) unabhängig voneinander in Anspruch nehmbar sind, und
die Nutzinformationen des ersten Dienstes (HSDPA) und des zweiten Dienstes (EDCH) zwischen der netzseitigen Funkstation (NodeB) und der Steuereinrichtung (RNC) über eine gemeinsame bidirektionale Verbindung (TNL com) übertragen werden.

2. Verfahren nach Anspruch 1, bei dem
die gemeinsame bidirektionale Verbindung (TNL com) in Bezug auf die Nutzinformationsübertragung ausschließlich zur Übertragung der Nutzinformationen des ersten Dienstes (HSDPA) und des zweiten Dienstes (EDCH) genutzt wird.

3. Verfahren nach Anspruch 1 oder 2, bei dem
der Teilnehmerstation (UE) für den ersten Dienst (HSDPA) und den zweiten Dienst (EDCH) paketvermittelte Funkressourcen zugewiesen werden.

4. Verfahren nach einem der Ansprüche 1 bis 3, bei dem
der erste Dienst (HSDPA) von der Teilnehmerstation (UE) in Anspruch genommen wird und über die gemeinsame bidirektionale Verbindung (TNL com) in Bezug auf die Nutzinformationsübertragung ausschließlich die Nutzinformationen des ersten Dienstes (HSDPA) übertragen werden, und später zusätzlich der zweite Dienst (EDCH) von der Teilnehmerstation (UE) in Anspruch genommen wird und über die gemeinsame bidirektionale Verbindung (TNL com) die Nutzinformationen des ersten Dienstes (HSDPA) und des zweiten Dienstes (EDCH) übertragen werden.

5. Verfahren nach einem der Ansprüche 1 bis 3, bei dem
der zweite Dienst (EDCH) von der Teilnehmerstation (UE) in Anspruch genommen wird und über die gemeinsame bidirektionale Verbindung (TNL com) in Bezug auf die Nutzinformationsübertragung ausschließlich die Nutzinformationen des zweiten Dienstes (EDCH) übertragen werden, und später zusätzlich der erste Dienst (HSDPA) von der Teilnehmerstation (UE) in Anspruch genommen wird und über die gemeinsame bidirektionale Verbindung (TNL com) die Nutzinformationen des ersten Dienstes (HSDPA) und des zweiten Dienstes (EDCH) übertragen werden.

6. Verfahren nach einem der Ansprüche 1 bis 5, bei dem Nutzinformationen eines dritten von der Teilnehmerstation (UE) in Anspruch genommenen Dienstes (call) zwischen der netzseitigen Funkstation (NodeB) und der Steuereinrichtung (RNC) über eine weitere bidirektionale Verbindung (TNL call) übertragen werden.

7. Verfahren nach Anspruch 6, bei dem
gemäß dem dritten Dienst (call) Nutzinformationen sowohl in Richtung zu der Teilnehmerstation (UE) hin als auch in Richtung von der Teilnehmerstation (UE) ausgehend übertragen werden.

8. Verfahren nach Anspruch 6 oder 7, bei dem
der Teilnehmerstation (UE) für den dritten Dienst (call) leitungsvermittelte Funkressourcen zugewiesen werden.

9. Verfahren nach einem der Ansprüche 1 bis 8, bei dem
es sich bei der netzseitigen Funkstation (NodeB) und der Steuereinrichtung (RNC) um Bestandteile eines UMTS-Mobilfunkkommunikationssystems handelt.

10. Netzseitige Funkstation (NodeB) für ein Funkkommunikationssystem, umfassend eine Teilnehmerstation (UE), die netzseitige Funkstation (NodeB) und eine Steuereinrichtung (RNC), mit
Mitteln zum Kommunizieren per Funk mit der Teilnehmerstation (UE) gemäß einem ersten von der Teilnehmerstation (UE) in Anspruch genommenen Dienst (HSDPA), bei welchem Nutzinformationen ausschließlich in Richtung zu der Teilnehmerstation (UE) hin übertragen werden,
Mitteln zum Kommunizieren per Funk mit der Teilnehmerstation (UE) gemäß einem zweiten von der Teilnehmerstation (UE) in Anspruch genommenen Dienst (EDCH), bei welchem Nutzinformationen ausschließlich in Richtung von der Teilnehmerstation (UE) ausgehend übertragen werden, wobei der erste Dienst (HSDPA) und der zweite Dienst (EDCH) unabhängig voneinander in Anspruch nehmbar sind,
Mitteln zum Empfangen der Nutzinformationen des ersten Dienstes (HSDPA) von der Steuereinrichtung (RNC) und zum Versenden der Nutzinformationen des zweiten Dienstes (EDCH) an die Steuereinrichtung (RNC), wobei die Nutzinformationen des ersten Dienstes (HSDPA) und des zweiten Dienstes (EDCH) zwischen der netzseitigen Funkstation (NodeB) und der Steuereinrichtung (RNC) über eine gemeinsame bidirektionale Verbindung (TNL com) übertragen werden.

11. Steuereinrichtung (RNC) für ein Funkkommunikationssystem, umfassend eine Teilnehmerstation (UE), eine netzseitige Funkstation (NodeB) und die Steuereinrichtung (RNC), mit Mitteln zum Senden von Nutzinformationen eines ersten von der Teilnehmerstation (UE) in Anspruch genommenen Dienstes (HSDPA) zu der netzseitigen Funkstation (NodeB) und zum Empfangen von Nutzinformationen eines zweiten von der Teilnehmerstation (UE) in Anspruch genommenen Dienstes (EDCH) von der netzseitigen Funkstation (NodeB), wobei die Nutzinformationen des ersten Dienstes (HSDPA) und des zweiten Dienstes (EDCH) zwischen der netzseitigen Funkstation (NodeB) und der Steuereinrichtung (RNC) über eine gemeinsame bidirektionale Verbindung (TNL com) übertragen werden,
wobei gemäß dem ersten Dienst (HSDPA) Nutzinformationen ausschließlich in Richtung zu der Teilnehmerstation (UE) hin und gemäß dem zweiten Dienst (EDCH) Nutzinformationen ausschließlich in Richtung von der Teilnehmerstation (UE) ausgehend übertragen werden, und der erste Dienst (HSDPA) und der zweite Dienst (EDCH) unabhängig voneinander in Anspruch nehmbar sind.
